# EUROPÄISCHE PATENTSCHRIFT

(11) **EP 0 520 271 B1**
(45) Veröffentlichungstag und Bekanntmachung des Hinweises auf die Patenterteilung: **19.02.1997**
(21) Anmeldenummer: 92110012.9
(22) Anmeldetag: 13.06.1992
(51) Int. Cl.: B60C 23/04

(54) **Kontinuierlich arbeitende Druckmessmethode für Reifen mit Signalübertragung und Vorrichtung zur Realisierung der Methode**
Continuously operating method for measuring tyre pressure with signal transmission and apparatus for realising this method
Méthode travaillant en continu pour mésurer la pression de gonflage des pneumatiques avec transmission des signaux et appareil pour réaliser cette méthode

(30) Priorität: 25.06.1991 IT MI911750
(43) Veröffentlichungstag der Anmeldung: 30.12.1992
(73) Patentinhaber: Gay, Claudio, CH-6918 Figino (CH)
(72) Erfinder: Gay, Claudio, CH-6918 Figino (CH)
(74) Vertreter: Gaggini, Carlo, Dipl.-Ing. ETH

(56) Entgegenhaltungen:
- DE-A- 2 850 787
- GB-A- 2 025 862
- US-A- 4 066 033
- US-A- 4 137 520

## Beschreibung

Bei einer kontinuierlich arbeitenden Drucküberwachung für Reifen von Kraftfahrzeugen besteht das Problem, eine geeignete Enegiequelle für den am Reifen befestigten Sender vorzusehen. Üblicherweise wird hierzu eine Batterie verwendet, die jedoch ständig überwacht und von Zeit zu Zeit ausgetauscht werden muß.

Bei der aus GB-A-2 025 862 bekannten Drucküberwachung wird vorgeschlagen, die sich im Reifen selbst befindliche Druckluft als Energiequelle zu nutzen und damit eine Pfeife zu betätigen, wenn der Reifendruck außerhalb von vorgegebenen Limiten liegt. Der Pfeifton soll entweder direkt vom Fahrer wahrgenommen werden oder über ein Mikrophon aufgefangen und verstärkt oder in ein elektrisches Signal umgewandelt werden.

Der Erfindung liegt die Aufgabe zugrunde, eine einfache Drucküberwachung vorzuschlagen, bei der ohne mitgeführte Batterien eine elektrische Signalübertragung von einem am Reifen befestigten Sender zu einem Empfänger am Fahrzeug ermöglicht wird.

Diese Aufgabe wird durch die im Patentanspruch 1 vorgeschlagene kontinuierlich arbeitenden Drucküberwachungsmethode für Reifen von Kraftfahrzeugen gelöst. Ausführungen hiervon sind in den abhängigen Patentansprüchen gekennzeichnet.

Die erfindungsgemäße Drucküberwachung hat den Vorteil, daß sie die zur Übermittlung von Alarmmeldungen notwendige Energie selbst produziert, sodaß sie weder Batterien noch sonstige externe elektromagnetische Induktionen benötigt. Solange der Druck im Reifen innerhalb der vorgegebenen Limite bleibt, wird überhaupt keine Energie benötigt.

Die Vorrichtung Sensor-Sender wird an der Radfelge befestigt und bleibt dauerhaft mit dem Druck-Ventil verbunden, bei schlauchlosen Reifen kann sie auch unabhängig vom Ventil angebracht werden.

Der Sensor-Sender aus drei Teilen:
- Drucksensor mit Druckluftzufuhr
- turbinengetriebener Elektrogenerator
- Hochfrequenzsender

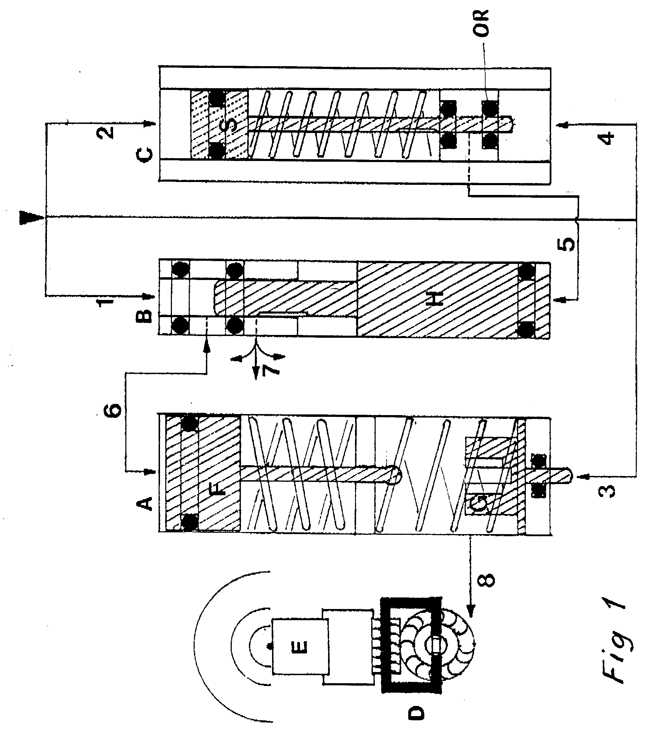

### Funktionsweise (siehe Fig. 1):

Vom Verbindungsstück am Reifen strömt die Druckluft über die Leitungen 2 und 4 zum Sensor C, über die Leitung 1 zum Umleiter B und über die Leitung 3 zum Ventil G. Wenn der Druck bis zum unteren Limit abfällt, zieht der Sensor-Kolben S unter Federdruck seine Kolbenstange aus der ersten Dichtung OR und öffnet die Leitung 5. Der Umleitkolben H wird vom Druck so verschoben, dass die Verbindung zwischen der Leitung 1 und der Leitung 6 unterbrochen und eine Verbindung zwischen Leitung 6 und der Ausgangsöffnung 7 hergestellt wird.

Der stufenweise Druckabfall im Zylinder A bewirkt ein Zurückgleiten des Kolbens F, welcher mit dem kugelförmigen Ende seiner Kolbenstange das Ventil G mitzieht und während zwei Sekunden die Leitung 8 öffnet.

Das Ventil G schliesst sich wieder unter Federdruck weil das kugelförmige Ende der Kolbenstange kurz vor Erreichen des Anschlages aus seinem Sitz gleitet.

Die Druckluft aktiviert den turbinengetriebenen Elektrogenerator D, welcher den Hochfrequenzsender E mit Energie versorgt.

Wenn den Druck bis zum oberen Limit ansteigt, presst der Sensor-Kolben S unter dem Druck der Luft seine Feder zusammen und stösst den angefrästen Teil seiner Kolbenstange so tief, bis die erste Dichtung OR den Durchgang zur Leitung 5 frei gibt.

An diesem Punkt läuft erneut der oben beschriebene Vorgang ab mit dem einzigen Unterschied, dass die Öffnungszeit zur Turbine D nur noch eine Sekunde anstatt zwei beträgt und zwar als Folge des erhöhten Druckes des Luft, welche durch die Fräsung im Kolben H ausströmt.

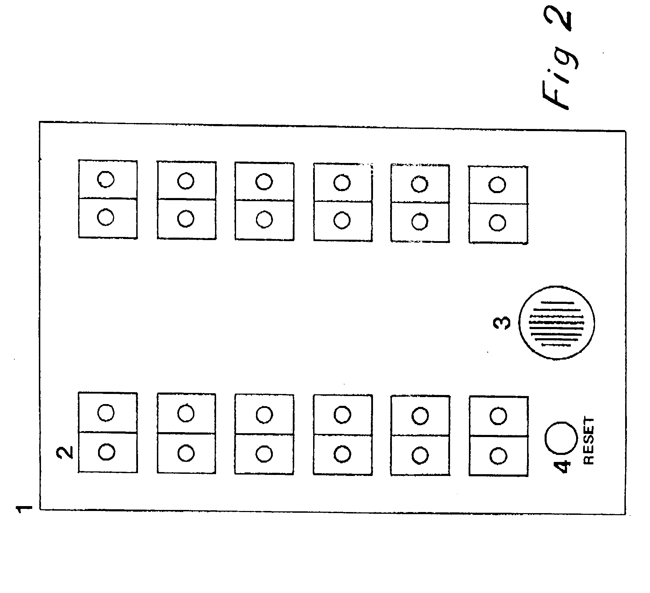

Der am Armaturenbrett des Fahrzeuges installierte Empfänger hat folgende Eigenschaften (Siehe Fig. 2):

Auf der Vorderseite 1 befinden sich zwei parallele Reihen von Leuchtdioden LED 2, welche die Anordnung sämtlicher Räder des Fahrzeuges wiederspiegeln. Jedes LED ist Teil eines elektronischen Moduls, welches den zu einem der an den Rädern montierten Sender gehörenen Decoder enthält und an einem beliebigen Steckplatz eingesetzt werden kann. Wenn der Empfänger ein Signal erhält, identifiziert er es auf Grund seiner Länge als Hoch- oder Niederdruck-Alarm und aktiviert in der Folge einen akustischen Warnton, (Summer 3). Bei zu niedrigem Druck ertönt ein Dauerton, bei zu hohem Druck ein unterbrochenes Warnsignal. Gleichzeitig leuchtet oder blinkt das dem empfangenen Code entsprechende LED-Modul analog zu dem ertönenden Warnton.

Wenn das Fahrzeug nicht in Betrieb ist, bleibt der Apparat in Empfangsbereitschaft. Er speichert eine oder auch mehrere eingehende Alarmmeldungen solange, bis das Fahrzeug wieder in Betrieb genommen wird und aktiviert erst beim Einschalten der Zündung die entsprechenden akustischen und optischen Alarmsignale.

Warnsignale, welche vom Fahrer zur Kenntnis genommen wurden, können durch Drücken der Taste RESET 4 abgeschaltet werden. Der Apparat bleibt weiterhin im Empfangsbereitschaft.

## Patentansprüche

1. Kontinuierlich arbeitende Drucküberwachungsmethode für Reifen von Kraftfahrzeugen mit einer Signalübertragung zum Fahrzeuglenker, bei der ein mit dem Reifeninneren über Leitungen (1 - 4) verbundener Drucksensor (C) vorgesehen ist, und bei der bei Erreichen eines oberen und eines unteren Limits des Reifendrucks eine kleine Menge der im Reifen enthaltenen Druckluft aus dem Reifeninneren als Energiequelle verwendet wird,
dadurch gekennzeichnet, daß die besagte kleine Menge der im Reifen enthaltenen Druckluft aus dem Reifeninneren auf einen turbinengetriebenen Elektrogenerator (D) geleitet wird, der die zum Betrieb eines am Rad montierten Hochfrequenzsender (E) notwendige elektrische Energie produziert, dessen Signale zu einem Empfänger in der Fahrerkabine übertragen werden.

2. Drucküberwachungsmethode nach Anspruch 1, dadurch gekennzeichnet, daß bei Erreichen des oberen bzw. des unteren Limits des Reifendrucks eine kleine Menge der im Reifen enthaltenen Druckluft für eine unterschiedliche Zeitdauer aus dem Reifeninneren auf den turbinengetriebenen Elektrogenerator (D) geleitet wird und daß der Empfänger in der Fahrkabine eine Unterscheidung der eintreffenden Signale nicht nur aufgrund der verschiedenen Code, welche die einzelnen Räder unterscheiden, sondern auch je nach Dauer in Hoch- oder Niederdruck-Alarm ermöglicht.

3. Drucküberwachungsmethode nach Anspruch 1, dadurch gekennzeichnet, daß der Empfänger des Signals an jede Anzahl und Anordnung der Räder eines Fahrzeuges mittels der auf seiner Vorderseite vorhandenen Steckplätze anpaßbar ist, in welche die zu den an den Rädern montierten Vorrichtungen gehörenden LED-Decoder-Module eingesetzt werden können.

4. Drucküberwachungsvorrichtung zur Realisierung der Methode nach Anspruch 1, dadurch gekennzeichnet, daß der Sensor (C) mit einem Kolben (S) und Dichtungen (OR) ausgerüstet und in der Lage ist, den Luftdruck und seine Veränderungen zu spüren, Luftleitungen (5, 6) für vorbestimmte, verschieden lange Zeiträume zu öffnen und zu schließen, in die. Ausgangslage zurückzukehren ohne jede zusätzliche Intervention außer der Wiederherstellung des korrekten Drucks im Reifen, wobei die Drucküberwachungsvorrichtung durch die Zentrifugalkraft und Erschütterungen, denen ein Rad während der Fahrt unterworfen ist, nicht beeinträchtigt wird.

## Claims

1. Continuously operating pressure monitoring method for tyres of motor vehicles with a signal transmission to the driver of the vehicle, wherein a pressure sensor (C) connected to the interior of the tyre via lines (1-4) is provided; and wherein, on reaching an upper and tower limit of the tyre pressure, a small quantity of the compressed air contained in the tyre is used from the interior of the tyre as an energy source, characterised in that the said small quantity of the compressed air contained in the tyre is led out of the interior of the tyre onto a turbine-driven electro-generator (D) which produces the electrical energy necessary to operate a high-frequency transmitter (E) mounted on the wheel, with the signals of the high-frequency transmitter being transmitted to a receiver in the driver's cabin.

2. Pressure monitoring method in accordance with claim 1, characterised in that, on reaching the upper or lower limit of the tyre pressure, a small quantity of the compressed air contained in the tyre is directed out of the interior of the tyre for a differing time duration onto the turbine-driven electro-generator (D); and in that the receiver in the driver's cabin enables a distinction to be made between the received signals not only as a result of the different codes which distinguish the individual wheels, but rather also enables a high pressure or low pressure alarm depending on the duration.

3. Pressure monitoring method in accordance with claim 1, characterised in that the receiver of the signal can be adapted to any number and arrangement of the wheels of a vehicle by means of the plug-in locations provided at its front side into which the LED-decoder modules belonging to the devices mounted on the wheels can be inserted.

4. Pressure monitoring apparatus for realising the method of claim 1, characterised in that the sensor (C) is equipped with a piston (S) and seals (OR) and is able to sense the air pressure and its changes, to open and close air lines (5, 6) for predetermined differing lengths of time, and to return into the initial position without any additional intervention other than the re-establishment of the correct pressure in the tyre, with the pressure monitoring device not being impaired by the centrifugal force and vibrations to which a wheel is subjected during the journey.

## Revendications

1. Procédé à déroulement en continu, pour surveiller la pression de gonflage des pneumatiques de véhicules automobiles, avec une transmission de signaux au conducteur du véhicule, dans lequel un capteur de pression (C), relié à la partie intérieure du pneumatique par des conduites (1 à 4), est prévu, et dans lequel, lors de l'atteinte d'une limite supérieure et d'une limite inférieure de la pression du pneumatique, une petite quantité de l'air comprimé contenu dans le pneu, issu de l'intérieur du pneu, est utilisée comme source d'énergie,
caractérisé en ce que ladite petite quantité d'air comprimé contenu dans le pneu est guidée hors de l'intérieur du pneu et amenée à un générateur électrique (D) entraîné par turbine qui produit l'énergie électrique nécessaire au fonctionnement d'un émetteur haute fréquence (E) monté sur la roue, émetteur dont les signaux sont transmis à un récepteur installé dans la cabine de conduite.

2. Procédé pour surveiller la pression selon la revendication 1, caractérisé en ce que, lors de l'atteints de la limite supérieure ou de la limite inférieure de la pression du pneu, une petite quantité de l'air comprimé contenu dans le pneu est dirigée, pendant un intervalle de temps de durée différente, depuis l'intérieur du pneu, sur le générateur électrique (D) entraîné par turbine, et en ce que le récepteur prévu dans la cabine de conduite permet d'effectuer une distinction entre les signaux entrants, non seulement du fait d'un code différent qui distingue les différentes roues, mais également selon la durée, pour donner une alarme de haute ou basse pression.

3. Procédé de surveillance de la pression selon la revendication 1, caractérisé en ce que le récepteur du signal est adaptable à tout nombre et tout agencement des roues d'un véhicule, au moyen d'emplacements d'enfichage existants sur sa face avant, emplacements dans lesquels les modules à décodeur et à LED appartenant aux dispositifs montés sur les roues peuvent être insérés.

4. Dispositif de surveillance de la pression, pour mettre en oeuvre le procédé selon la revendication 1, caractérisé en ce que la capteur (C) est équipé d'un piston (S) et de joints d'étanchéité (OR) et est en mesure d'appréhender la pression de l'air et ses fluctuations, d'ouvrir et de fermer pendant des intervalles de temps prédéterminés, de longueur différente, des conduites d'air (5, 6), de revenir en position initiale sans aucune intervention supplémentaire hormis le rétablissement de la pression correcte dans le pneu, le dispositif de surveillance de la pression n'étant pas perturbé par la force centrifuge et les secousses auxquelles est soumise une roue pendant le roulage.
